# FASCICULE DE BREVET EUROPEEN

(11) **EP 2 812 230 B1**
(45) Date de publication et mention de la délivrance du brevet: **13.07.2016**
(21) Numéro de dépôt: 12788592.9
(22) Date de dépôt: 23.11.2012
(51) Int. Cl.: B62D 25/14, B62D 65/14

(54) **STRUCTURE DE MONTAGE D'UN POSTE DE CONDUITE D'UN VEHICULE**
STRUKTUR ZUM AUFBAU EINER FAHRZEUGLENKERPOSITION
STRUCTURE FOR BUILDING A VEHICLE DRIVER'S POSITION

(30) Priorité: 09.02.2012 FR 1251193
(43) Date de publication de la demande: 17.12.2014
(73) Titulaire: Renault S.A.S., 92100 Boulogne-Billancourt (FR)
(72) Inventeur: LARVOR, Philippe, F-78960 Voisins Le Bretonneux (FR)
(86) Numéro de dépôt international: PCT/EP2012/073503
(87) Numéro de publication internationale: WO 2013/117261

(56) Documents cités:
- EP-A2- 1 162 127
- JP-A- 2007 331 450

## Description

L'invention concerne une structure de montage d'un poste de conduite d'un véhicule.

Lors de l'assemblage du véhicule, le poste de conduite est monté en bloc sur la caisse du véhicule, laquelle est déjà équipée d'une traverse inférieure de baie et d'une cloison, appelée tablier, séparant l'habitacle du compartiment moteur. Ce poste de conduite est composé de la planche de bord et d'une traverse de planche de bord sur laquelle est monté le groupe de climatisation. D'autres éléments peuvent éventuellement faire partie du poste de conduite, par exemple une partie du mécanisme de direction. En général, lors du montage du poste de conduite, la planche de bord est fixée à la traverse inférieure de baie et des tuyaux du groupe de climatisation traversent le tablier lequel comprend des ouvertures adaptées.

Il existe actuellement plusieurs procédés de montage d'un poste de conduite.

Un procédé consiste à disposer sur la caisse des pilotes orientés suivant l'axe longitudinal du véhicule (axe X), ces pilotes étant engagés dans des orifices correspondants prévus sur des plaques perpendiculaires à cet axe X et situées à chaque extrémité de la traverse de planche de bord. Après engagement, les plaques sont solidarisées par des vis suivant l'axe longitudinal du véhicule. Ce procédé de montage permet ainsi un accostage du poste de conduite sur la caisse suivant l'axe X du véhicule, ce qui permet une fixation de la planche de bord sur la traverse inférieure de baie suivant l'axe X. Cette fixation en X permet un positionnement précis et un bon maintien de la planche de bord sur la traverse inférieure, et par conséquent un bon comportement de cette fixation dans le temps avec des risques de déformation faibles. Cette fixation en X permet également la traversée du tablier par les tuyaux du groupe de climatisation suivant l'axe X, de sorte que les ouvertures du tablier peuvent être de dimensions relativement faibles et qu'un faible jeu peut être obtenu entre les tuyaux et les bords de ces ouvertures. Or, plus ce jeu est faible, moins les pertes acoustiques seront importantes. Il est ainsi possible d'obtenir une bonne isolation acoustique de l'habitacle par rapport au compartiment moteur.

Toutefois, du fait de leur orientation suivant l'axe X, les pilotes ne peuvent être solidarisés directement sur la caisse du véhicule et doivent être fixés sur des boitiers solidaires de parois latérales de la caisse. Ces boîtiers s'avèrent encombrants et lourds.

Un autre procédé de montage permet d'éviter l'utilisation de boîtiers lourds et encombrants. Ce procédé, décrit dans le document EP 1 604 885 B1, consiste à positionner, sur des parois latérales de la caisse, des pilotes orientés suivant l'axe transversal du véhicule (axe Y). Des plaques situées à chaque extrémité de la traverse de planche de bord perpendiculairement à cette traverse, sont pourvues de rainures de guidage en forme de V dans lesquelles les pilotes s'engagent lors de l'accostage du poste de conduite. Toutefois, du fait de la forme en V des rainures, il est nécessaire d'agrandir les ouvertures du tablier pour le passage des tuyaux du groupe de climatisation. Ces ouvertures relativement grandes peuvent être des sources de pertes acoustiques. Enfin, un tel accostage rend plus délicat le positionnement et la fixation de la planche de bord par rapport à la traverse inférieure de baie, ce qui peut engendrer une déformation de la planche de bord au cours du temps.

Le document JP 2007 331450 A décrit par ailleurs une structure de montage d'un poste de conduite conforme au préambule de la revendication 1.

L'invention vise à pallier ces inconvénients et à améliorer les structures connues en proposant une structure de montage d'un poste de conduite qui ne nécessite pas d'utilisation de boîtiers fixés à la caisse et qui permette à la fois d'assurer un positionnement précis de la planche de bord par rapport à la traverse inférieure de baie et de réduire la taille des ouvertures du tablier.

A cet effet, l'objet de l'invention concerne une structure de montage pour le montage d'un poste de conduite sur une carrosserie de véhicule, ladite structure comprenant :
- au moins un élément de montage solidaire du poste de conduite,
- au moins un élément latéral de carrosserie positionné pour coopérer avec un élément de montage,
- au moins un mécanisme de guidage configuré pour guider le déplacement du poste de conduite par rapport à la carrosserie jusqu'à une position de maintien, ce mécanisme de guidage comprenant une goupille de guidage agencée dans un élément choisi parmi un élément latéral de carrosserie ou un élément de montage, et un canal de guidage correspondant agencé sur l'autre élément, élément de montage ou élément latéral de carrosserie,
au moins un mécanisme de guidage étant associé à chaque élément de montage, le canal de guidage de chaque mécanisme de guidage étant rectiligne et s'étendant parallèlement à la direction longitudinale du véhicule en position de montage du poste de conduite, de manière à guider le poste de conduite suivant un déplacement rectiligne parallèle à la direction longitudinale du véhicule jusqu'à la position de maintien.

Une telle structure de montage permet l'accostage du poste de conduite suivant la direction longitudinale du véhicule jusqu'à une position de maintien, le poids du poste de conduite reposant sur le mécanisme de guidage et plus particulièrement sur les goupilles de guidage. Les goupilles de guidage seront ainsi avantageusement conformées de manière à supporter le poids du poste de conduite. Généralement, cette structure de montage comprendra au moins deux éléments de montage solidaires du poste de conduite, et en particulier, au moins un élément de montage à chaque extrémité latérale du poste de conduite coopérant chacun avec un élément latéral de carrosserie situé de chaque côté de la carrosserie.

Une fois dans la position de maintien, le poste de conduite, supporté via les mécanismes de guidage, peut être solidarisé à la carrosserie par vissage, les vis s'étendant suivant la direction transversale du véhicule.

Il est ainsi possible de faire accoster le poste de conduite suivant la direction longitudinale du véhicule, ce qui permet de réaliser des ouvertures dans le tablier qui soient de dimensions à peine supérieures aux dimensions des tuyaux du groupe de climatisation, et ce qui permet également de positionner précisément le poste de conduite, et plus particulièrement la planche de bord, par rapport à la traverse de baie.

De plus, aucun boîtier intermédiaire n'est nécessaire pour supporter la goupille ou le canal de guidage d'un mécanisme de guidage.

Dans un mode de réalisation particulier, les goupilles de guidage de chaque mécanisme de guidage, seront solidaires de l'élément latéral de carrosserie.

Avantageusement et de manière non limitative, le canal de guidage de chaque mécanisme de guidage comprend au moins une butée agencée pour bloquer la goupille de guidage dans la position de maintien. Un tel agencement permet de maintenir le poste de conduite dans la position de maintien avant sa fixation définitive. Cet agencement peut aussi permettre d'éviter une chute du poste de conduite avant sa fixation définitive à la carrosserie du véhicule.

La butée peut par exemple comprendre une surface de guidage sur laquelle peut glisser la goupille de guidage lors de son déplacement jusqu'à la position de maintien, cette surface de guidage s'écartant d'une paroi rectiligne du canal de guidage en direction de la position de maintien, et une surface plane perpendiculaire à la direction de déplacement de la goupille de guidage, la goupille de guidage comprenant alors une surface plane conformée pour coopérer avec la surface plane de la butée.

A cet effet, la surface plane de la goupille peut être un méplat réalisé sur une portion d'une goupille, cette goupille étant par exemple de forme cylindrique. La goupille peut également présenter une surface plane sur toute sa longueur, la section transversale de la goupille présentant alors un côté rectiligne. Cette section transversale peut être en forme de demi-cercle.

Avantageusement et de manière non limitative, le canal de guidage de chaque mécanisme de guidage peut comprendre une extrémité fermée et une butée positionnée de sorte que le poste de conduite soit en position de maintien lorsque la goupille est située entre la butée et l'extrémité fermée, ou bien le canal de guidage peut comprendre deux butées positionnées de sorte que le poste de conduite soit en position de maintien lorsque la goupille est située entre les deux butées.

Lorsque deux butées sont réalisées, la deuxième butée, située en aval de la première butée par rapport au déplacement de la goupille vers la position de maintien, sera donc conformée pour bloquer la progression de la goupille. La goupille pourra présenter une forme adaptée pour coopérer avec cette deuxième butée (par exemple une autre surface plane coopérant avec une surface plane de cette deuxième butée).

Avantageusement et de manière non limitative, le canal comporte une extrémité ouverte évasée vers l'extérieur du canal. Ceci permet de faciliter l'approche de la goupille de guidage et son insertion dans le canal.

Avantageusement et de manière non limitative, la structure de montage peut comporter au moins un mécanisme de guidage auxiliaire comprenant une goupille de guidage auxiliaire agencée dans un élément choisi parmi un élément de carrosserie latéral ou un élément de montage, et au moins une surface de guidage correspondante agencée sur l'autre élément, élément de montage ou élément de carrosserie latéral, ladite surface de guidage s'étendant parallèlement au canal de guidage d'un mécanisme de guidage et étant agencée pour guider la goupille de guidage auxiliaire lorsque les autres goupilles de guidage sont déplacées dans leur canal de guidage.

Ceci permet d'améliorer la stabilité du poste de conduite en évitant tout basculement autour des goupilles de guidage insérées dans les canaux de guidage, notamment lorsque deux mécanismes de guidage à canal de guidage sont utilisés pour guider le poste de conduite.

Pour des facilités de réalisation, les goupilles de guidage des deux mécanismes de guidage, à savoir du mécanisme de guidage à canal de guidage et du mécanisme de guidage auxiliaire, seront de préférence situées sur un même élément, par exemple sur l'élément latéral de carrosserie.

La structure de montage peut par exemple comprendre deux mécanismes de guidage à canal de guidage et un ou deux mécanismes de guidage auxiliaires.

En particulier, la surface de guidage d'un mécanisme de guidage auxiliaire peut être pourvue d'au moins une butée agencée pour bloquer la goupille de guidage auxiliaire dans la position de maintien, voire de deux butées.

Avantageusement et de manière non limitative, la structure de montage peut comprendre au moins trois mécanismes de guidage comprenant un canal de guidage, répartis sur deux éléments de montage. Ceci permet d'assurer l'iso-statisme du poste de conduite lors du montage et dans la position de maintien. Avantageusement, quatre mécanismes de guidage comprenant un canal de guidage peuvent être prévus.

Avantageusement et de manière non limitative, la structure de montage comprend deux éléments de montage formés chacun d'une plaque solidaire du poste de conduite, ces plaques s'étendant dans des plans perpendiculaires à la direction transversale du véhicule lorsque le poste de conduite est monté sur un véhicule.

Ces éléments de montage peuvent par exemple être solidaires d'une traverse de planche de bord faisant partie du poste de conduite, cette traverse s'étendant suivant la direction transversale du véhicule lorsque le poste de conduite est monté sur un véhicule.

Avantageusement et de manière non limitative, le canal de guidage de chaque mécanisme de guidage est réalisé par découpe d'une partie de la plaque formant un élément de montage. La réalisation est ainsi facile et peu coûteuse.

L'invention est maintenant décrite en référence aux dessins annexés, non limitatifs, dans lesquels :
- la figure 1 est une représentation schématique en perspective d'un poste de conduite vu de l'avant du véhicule et d'une structure de montage selon l'invention ;
- la figure 2 est une vue de côté d'un élément de montage,
- les figures 3 et 4 sont des vues agrandies de côté d'un canal de guidage d'un mécanisme de guidage, avec et sans pilote.

Dans la présente description, les termes avant, arrière, supérieur, inférieur, font référence aux directions avant et arrière du véhicule, lorsque le poste de conduite est monté sur un véhicule. Les axes X, Y, Z, correspondent respectivement à l'axe longitudinal (d'avant en arrière), transversal et vertical du véhicule et forment un repère orthonormé. Les axes X et Y s'étendent ainsi dans un plan horizontal.

Par sensiblement horizontal, longitudinal ou vertical, on entend une direction/un plan formant un angle d'au plus ±10° avec une direction/un plan horizontal, longitudinal ou vertical.

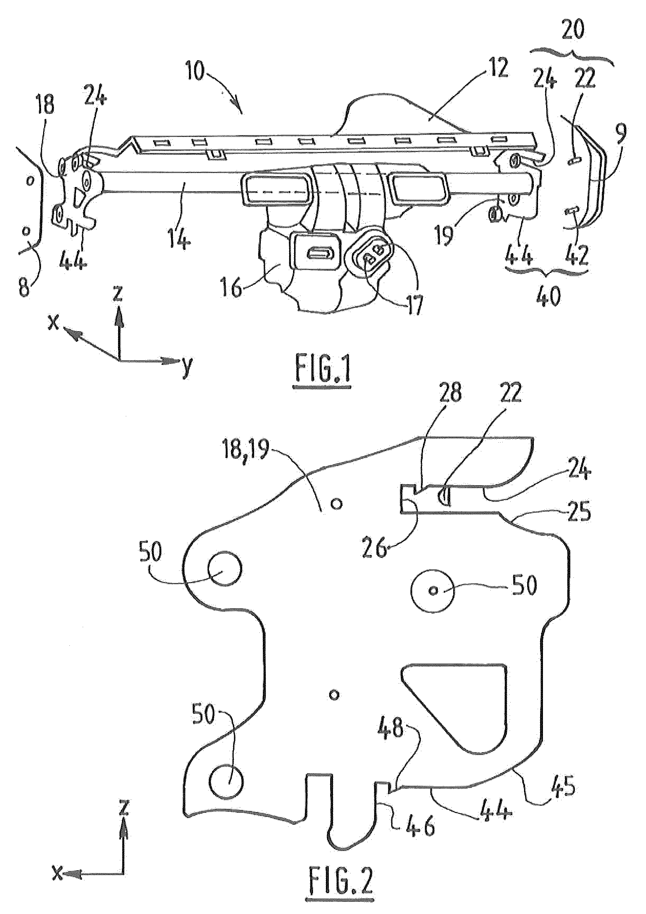

La figure 1 représente une structure de montage pour le montage d'un poste de conduite sur une carrosserie de véhicule.

Le poste de conduite 10 représenté sur la figure 1 comprend une planche de bord 12 (partiellement représentée), une traverse de planche de bord 14 et un groupe de climatisation 16. Le poste de conduite 10 présente deux extrémités latérales situées de part et d'autre du poste de conduite 10 suivant la direction transversale Y du véhicule.

Chaque extrémité latérale du poste de conduite 10 comporte un élément de montage 18, 19 destiné au montage du poste de conduite 10 sur la carrosserie du véhicule. Ces éléments de montage 18, 19 sont formés chacun d'une plaque solidaire du poste de conduite 10, ces plaques s'étendant dans des plans perpendiculaires à la direction transversale Y du véhicule. Généralement, les éléments de montage 18, 19 sont solidaires de la traverse de planche de bord 12 faisant partie du poste de conduite 10, cette traverse de planche de bord 12 s'étendant suivant la direction transversale du véhicule.

La figure 1 représente également partiellement deux éléments latéraux de carrosserie 8, 9, situés de chaque côté de la carrosserie et positionnés pour coopérer chacun avec un élément de montage correspondant 18, 19. Ces éléments latéraux de carrosserie 8, 9 peuvent être une doublure de pied avant ou tout élément latéral de carrosserie du véhicule pouvant supporter le poids du poste de conduite 10 lors de son montage.

Les éléments de montage 18, 19 et les éléments latéraux 8, 9 de carrosserie font partie de la structure de montage du poste de conduite 10 représenté.

Cette structure de montage comprend également au moins un mécanisme de guidage 20 configuré pour guider le déplacement du poste de conduite 10 par rapport à la carrosserie jusqu'à une position de maintien.

Cette position de maintien correspond à une position dans laquelle le poste de conduite 10 peut être fixé définitivement à la carrosserie du véhicule.

Dans l'exemple représenté, chaque élément de montage 18, 19 comprend un seul mécanisme de guidage 20.

Ce mécanisme de guidage 20 est représenté plus en détail sur les figures 2 à 4. Il comprend une goupille de guidage 22 agencée dans un élément latéral de carrosserie 8, 9 et un canal de guidage 24 correspondant agencé sur l'autre élément : l'élément de montage 18, 19, pour guider le poste de conduite 10 jusqu'à la position de maintien.

Le canal de guidage 24 de chaque mécanisme de guidage 20 est rectiligne et s'étend parallèlement à la direction longitudinale X du véhicule de manière à guider le poste de conduite 10 suivant un déplacement rectiligne parallèle à la direction longitudinale X du véhicule jusqu'à la position de maintien.

Le canal de guidage 24 de chaque mécanisme de guidage est réalisé par découpe d'une partie de la plaque formant un élément de montage 18, 19.

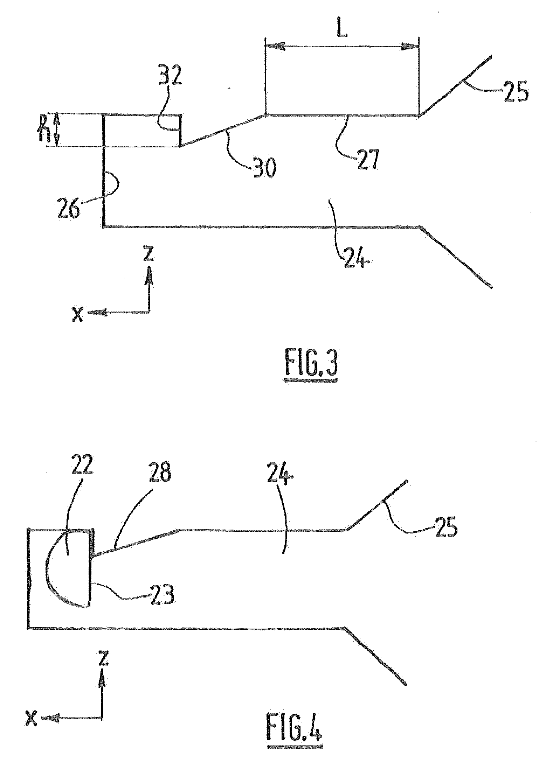

Le canal de guidage 24 de chaque mécanisme de guidage 20 présente une extrémité ouverte 25 et une extrémité fermée 26, l'extrémité ouverte 25 étant ouverte vers l'avant du véhicule lorsque le poste de conduite est monté sur le véhicule (figures 3, 4). L'extrémité ouverte 25 est évasée vers l'extérieur du canal afin de faciliter l'approche et l'engagement de la goupille de guidage 22 dans la partie évasée, puis son guidage vers le canal de guidage 24 et son insertion dans celui-ci. Cette zone d'avaloir formée par l'extrémité évasée 25 permet ainsi d'absorber les différentes positions du poste de conduite lors de son approche, ces positions pouvant varier de ± 10 mm suivant l'axe Z. Dans l'exemple de réalisation illustré à la figure 4, la hauteur suivant la direction Z du canal de guidage est typiquement de 12 à 14 mm. La dimension la plus grande de la partie évasée à l'extrémité ouverte 25 du canal de guidage 24 est par exemple de 32 à 34 mm. Cette partie évasée a donc une dimension diminuant progressivement de 32-34 mm jusqu'à 12-14 mm à l'entrée d'une partie du canal aux bords parallèles et rectilignes.

Dans une zone avancée vers le fond du canal de guidage 24, celui-ci comprend une butée 28 agencée pour bloquer la goupille de guidage 22 dans la position de maintien.

Dans l'exemple représenté, la butée 28 comprend une surface de guidage 30 ayant la forme générale d'une pente sur laquelle peut glisser la goupille de guidage 22 lors de son déplacement jusqu'à la position de maintien, cette surface de guidage 30 s'écartant progressivement d'une paroi rectiligne 27 du canal de guidage en direction de la position de maintien. Dans ca partie la plus écartée de la paroi rectiligne 27, la surface de guidage 30 est adjacente à une surface plane 32 perpendiculaire à la direction de déplacement de la goupille de guidage 22 dans le canal de guidage 24. La butée 28 est ainsi formée des deux surfaces 30 et 32 et sa hauteur h (dimension suivant l'axe Z par rapport depuis la paroi rectiligne 27 du canal de guidage) sera suffisante pour assurer un maintien de la goupille de guidage 22 à l'intérieur du canal de guidage 24. La hauteur h de la surface plane 32 correspond à la dimension maximale de la surface de guidage 30 mesurée suivant la direction verticale Z. Cette hauteur h peut par exemple être de 2 à 3 mm, par exemple de 2,5 mm.

Le canal de guidage 24 comprend ainsi une paroi 27 rectiligne entre son extrémité ouverte 25 et la butée 28, d'une longueur L prédéterminée suivant l'axe longitudinal X. Cette longueur L sera suffisante pour permettre aux tuyaux 17 du groupe de climatisation 16 de traverser le tablier du véhicule lors du montage du poste de conduite 10. Dans l'exemple illustré, la longueur L de la paroi 27 rectiligne (entre la partie évasée et la base de la surface de guidage 30) est typiquement de l'ordre de 50 mm.

La goupille de guidage 22 comprend une surface plane 23 conformée pour coopérer avec la surface plane 32 de la butée en position de maintien, tel que représenté sur la figure 4.

La goupille de guidage 23 s'étend suivant la direction transversale Y du véhicule. Dans l'exemple illustré la goupille de guidage 23 est formée dans un élément ayant une forme générale cylindrique à son extrémité libre, dont le diamètre est typiquement de l'ordre de 10 mm. Une partie de cette forme cylindrique tournée vers l'arrière du véhicule est usinée de façon à présenter une surface plane 23 face aplatie s'étendant suivant les directions verticale Z et transversale Y. Dans l'exemple représenté sur la figure 4, la goupille de guidage 22 présente une surface plane 23 sur toute sa longueur (mesurée suivant la direction verticale Z), la section transversale de la goupille présentant alors une forme de demi-cercle.

Dans un autre exemple non représenté, la surface plane 23 de la goupille de guidage 22 est un méplat réalisé sur une portion de la longueur de la goupille 22 de forme cylindrique.

La structure de montage décrite en référence aux figures comprend également un mécanisme de guidage auxiliaire 40 sur chacun des éléments de montage 18, 19.

Ce mécanisme de guidage auxiliaire 40 comprend une goupille de guidage auxiliaire 42 agencée dans l'élément de carrosserie latéral 8, 9, et une surface de guidage 44 correspondante agencée sur l'élément de montage 18, 19. Cette surface de guidage 44 s'étend parallèlement au canal de guidage 24 d'un mécanisme de guidage 20 et est agencée pour guider la goupille de guidage auxiliaire 42 lorsque les autres goupilles de guidage 22 sont déplacées dans leur canal de guidage 24 suivant l'axe longitudinal X, vers l'avant du véhicule.

La surface de guidage 44 est également pourvue d'une butée 48 agencée pour bloquer la goupille de guidage auxiliaire 42 dans la position de maintien. Les surfaces de guidage 44 forment un bord de l'élément de montage.

L'une 46 des extrémités de la surface de guidage 44 pourra être fermée par une paroi 46 perpendiculaire à la surface de guidage, participant ainsi au blocage de la goupille de guidage auxiliaire 42 dans la position de maintien, tandis que l'autre 45 extrémité de la surface de guidage 44 pourra être inclinée afin de favoriser l'approche du poste de conduite 10 au montage (figure 2).

Les éléments de montage 18, 19, comprennent également des orifices 50 pour leur fixation sur les éléments latéraux de carrosserie 8, 9.

Le montage du poste de conduite 10 est réalisé de la manière suivante. Le poste de conduite 10 est approché de la carrosserie du véhicule suivant la direction longitudinale X de ce dernier, jusqu'à ce que les goupilles de guidage 22 (formant des pilotes) entrent dans leur canal de guidage respectif 24 des éléments de montage 18, 19. Pendant le même temps, les goupilles de guidage auxiliaires 42 viennent en prise avec leur surface de guidage respective 44 des éléments de montage 18, 19. Le poste de conduite 10 est déplacé suivant l'axe X vers l'avant du véhicule jusqu'à ce que les goupilles de guidage 22 et les goupilles de guidage auxiliaires 42 aient passé les butées 28 et 48 et soient ainsi maintenues dans la position de maintien.

Une fois dans la position de maintien, le poste de conduite 10, qui est supporté via les mécanismes de guidage, peut être solidarisé à la carrosserie par vissage, les vis s'étendant suivant la direction transversale Y du véhicule. Des opérations ultérieures de fixation de la planche de bord 12 à une traverse inférieure de baie peuvent être réalisées. Du fait de l'accostage en X, cette fixation peut être réalisée par encliquetage de doigts s'étendant suivant l'axe X dans des logements adaptés de la traverse inférieure de baie

## Revendications

1. Structure de montage pour le montage d'un poste de conduite (10) sur une carrosserie de véhicule, ladite structure comprenant :
- au moins un élément de montage (18, 19) solidaire du poste de conduite (10),
- au moins un élément latéral de carrosserie (8, 9) positionné pour coopérer avec un élément de montage (18, 19),
- au moins un mécanisme de guidage (20) configuré pour guider le déplacement du poste de conduite (20) par rapport à la carrosserie jusqu'à une position de maintien, ce mécanisme de guidage comprenant une goupille de guidage (22) agencée dans un élément choisi parmi un élément latéral de carrosserie (8, 9) ou un élément de montage (18, 19), et un canal de guidage (24) correspondant agencé sur l'autre élément, élément de montage (18, 19) ou élément latéral de carrosserie (8, 9),
au moins un mécanisme de guidage (20) étant associé à chaque élément de montage (18, 19) tandis que le canal de guidage (24) de chaque mécanisme de guidage (20) est rectiligne et s'étend parallèlement à la direction longitudinale du véhicule en position de montage du poste de conduite (10), de manière à guider le poste de conduite suivant un déplacement rectiligne parallèle à la direction longitudinale du véhicule jusqu'à la position de maintien, le canal de guidage (24) de chaque mécanisme de guidage (20) comprenant au moins une butée (28) agencée pour bloquer la goupille de guidage (22) dans la position de maintien, la butée (28) comprenant une surface de guidage (30) sur laquelle peut glisser la goupille de guidage (22) lors de son déplacement jusqu'à la position de maintien, cette surface de guidage (30) s'écartant d'une paroi rectiligne (27) du canal de guidage en direction de la position de maintien, et une surface plane (32) perpendiculaire à la direction de déplacement de la goupille de guidage (22), **caractérisé en ce que** la goupille de guidage (22) comprend une surface plane (23) conformée pour coopérer avec la surface plane (32) de la butée.

2. Structure de montage selon la revendication 1, **caractérisée en ce que** le canal de guidage (24) de chaque mécanisme de guidage (20) comprend une extrémité fermée (26) et une butée (28) positionnée de sorte que le poste de conduite (10) soit en position de maintien lorsque la goupille de guidage (22) est située entre la butée (28) et l'extrémité fermée (26), ou **en ce que** le canal de guidage (24) comprend deux butées positionnées de sorte que le poste de conduite (10) soit en position de maintien lorsque la goupille de guidage (22) est située entre les deux butées.

3. Structure de montage la revendication 1 ou 2, **caractérisée en ce que** le canal de guidage (24) comporte une extrémité ouverte (25) évasée vers l'extérieur du canal de guidage (24).

4. Structure de montage selon l'une des revendications 1 à 3, **caractérisée en ce qu'**elle comprend au moins un mécanisme de guidage auxiliaire (40) comprenant une goupille de guidage auxiliaire (42) agencée dans un élément choisi parmi un élément de carrosserie latéral (8, 9) ou un élément de montage (18, 19), et au moins une surface de guidage (44) correspondante agencée sur l'autre élément, élément de montage (18, 19) ou élément de carrosserie latéral (8, 9), ladite surface de guidage (44) s'étendant parallèlement au canal de guidage (24) d'un mécanisme de guidage (20) et étant agencée pour guider la goupille de guidage auxiliaire (42) lorsque les autres goupilles de guidage (22) sont déplacées dans leur canal de guidage (24).

5. Structure de montage selon la revendication 4, **caractérisée en ce que** la surface de guidage (44) d'un mécanisme de guidage auxiliaire (40) est pourvue d'au moins une butée (48) agencée pour bloquer la goupille de guidage auxiliaire (42) dans la position de maintien.

6. Structure de montage selon l'une des revendications 1 à 5, **caractérisée en ce qu'**elle comprend au moins trois mécanismes de guidage (20) comprenant un canal de guidage, répartis sur deux éléments de montage.

7. Structure de montage selon l'une des revendications 1 à 6, **caractérisée en ce qu'**elle comprend deux éléments de montage (18, 19) formés chacun d'une plaque solidaire du poste de conduite (10), ces plaques s'étendant dans des plans perpendiculaires à la direction transversale du véhicule lorsque le poste de conduite (10) est monté sur un véhicule.

8. Structure de montage selon la revendication 7, **caractérisée en ce que** le canal de guidage (24) de chaque mécanisme de guidage (20) est réalisé par découpe d'une partie de la plaque formant un élément de montage (18, 19).

## Patentansprüche

1. Montagestruktur zur Montage eines Fahrerstandes (10) an einer Fahrzeugkarosserie, wobei die Struktur Folgendes aufweist:
- mindestens ein fest mit dem Fahrerstand (10) verbundenes Element zur Montage (18, 19),
- mindestens ein seitliches Karosserieelement (8, 9), welches angeordnet ist, um mit einem Element zur Montage (18, 19) zusammenzuwirken,
- mindestens einen Führungsmechanismus (20), welcher dafür ausgelegt ist, um die Verschiebung des Fahrerstands (20) in Bezug auf die Karosserie bis zu einer Haltepostion zu führen, wobei dieser Führungsmechanismus einen Führungsstift (22), welcher in einem Element angeordnet ist, welches aus einem seitlichen Karosserieelement (8, 9) oder einem Element zur Montage (18, 19) ausgewählt wird, und einen entsprechenden Führungskanal (24) aufweist, welcher an dem anderen Element, Element zur Montage (18, 19) oder seitliches Karosserieelement (8, 9) angeordnet ist,
wobei mindestens ein Führungsmechanismus (20) jedem Element zur Montage (18, 19) zugeordnet ist, während der Führungskanal (24) von jedem Führungsmechanismus (20) geradlinig ist und sich parallel zur longitudinalen Richtung des Fahrzeugs in Montageposition des Fahrerstands (10) derartig erstreckt, dass der Fahrerstand gemäß einer geradlinigen Verschiebung parallel zur longitudinalen Richtung des Fahrzeugs bis zur Halteposition geführt wird, wobei der Führungskanal (24) jedes Führungsmechanismus (20) mindestens einen Anschlag (28) aufweist, welcher eingerichtet ist, um den Führungsstift (22) in der Halteposition zu blockieren, wobei der Anschlag (28) eine Führungsfläche (30) aufweist, über welche der Führungsstift (22) bei seiner Verschiebung in die Halteposition gleiten kann, wobei sich die Führungsfläche (30) von einer geradlinigen Wand (27) des Führungskanals in Richtung der Halteposition entfernt, und eine ebene, zur Verschieberichtung des Führungsstiftes (22) senkrechte Ebene (32) aufweist, **dadurch gekennzeichnet, dass** der Führungsstift (22) eine ebene Fläche (23) aufweist, welche angepasst ist, mit der ebenen Fläche (32) des Anschlags zusammenzuwirken.

2. Montagestruktur nach Anspruch 1, **dadurch gekennzeichnet, dass** der Führungskanal (24) jedes Führungsmechanismus (20) ein geschlossenes Ende (26) und einen Anschlag (28) aufweist, welcher derartig angeordnet ist, dass der Fahrerstand (10) in Halteposition ist, wenn sich der Führungsstift (22) zwischen dem Anschlag (28) und dem geschlossenen Ende (26) befindet, oder dass der Führungskanal (24) zwei Anschläge aufweist, welche derartig angeordnet sind, dass der Fahrerstand (10) in Halteposition ist, wenn sich der Führungsstift (22) zwischen den beiden Anschlägen befindet.

3. Montagestruktur nach Anspruch 1 oder 2, **dadurch gekennzeichnet, dass** der Führungskanal (24) ein offenes Ende (25) aufweist, welches zum Außenbereich des Führungskanals (24) hin aufgeweitet ist.

4. Montagestruktur nach einem der Ansprüche 1 bis 3, **dadurch gekennzeichnet, dass** sie mindestens einen Hilfsführungsmechanismus (40) aufweist, welcher einen Hilfsführungsstift (42), welcher an einem Element angeordnet ist, welches aus einem seitlichen Karosserieelement (8, 9) oder einem Element zur Montage (18, 19) ausgewählt wird, und mindestens eine entsprechende Führungsfläche (44) aufweist, welche an dem anderen Element, Element zur Montage (18, 19) oder seitliches Karosserieelement (8, 9), angeordnet ist, wobei sich die Führungsfläche (44) parallel zum Führungskanal (24) eines Führungsmechanismus (20) erstreckt und angeordnet ist, um den Hilfsführungsstift (42) zu führen, wenn die anderen Führungsstifte (22) in ihrem Führungskanal (24) verschoben werden.

5. Montagestruktur nach Anspruch 4, **dadurch gekennzeichnet, dass** die Führungsfläche (44) eines Hilfsführungsmechanismus (40) mit mindestens einem Anschlag (48) versehen ist, welcher eingerichtet ist, um den Hilfsführungsstift (42) in der Halteposition zu blockieren.

6. Montagestruktur nach einem der Ansprüche 1 bis 5, **dadurch gekennzeichnet, dass** sie mindestens drei, einen Führungskanal aufweisende Führungsmechanismen (20) aufweist, welche auf zwei Elemente zur Montage verteilt sind.

7. Montagestruktur nach einem der Ansprüche 1 bis 6, **dadurch gekennzeichnet, dass** sie zwei Elemente zur Montage (18, 19) aufweist, welche jeweils von einer fest mit dem Fahrerstand (10) verbundenen Platte gebildet werden, wobei sich diese Platten in Ebenen senkrecht zur Querrichtung des Fahrzeugs erstrecken, wenn der Fahrerstand (10) im Fahrzeug montiert ist.

8. Montagestruktur nach Anspruch 7, **dadurch gekennzeichnet, dass** der Führungskanal (24) jedes Führungsmechanismus (20) durch Ausschneiden eines Abschnitts der ein Element zur Montage (18, 19) bildenden Platte erzielt wird.

## Claims

1. Mounting structure for mounting a cockpit module (10) on a vehicle body, said structure comprising:
- at least one mounting element (18, 19) fixed to the cockpit module (10),
- at least one lateral vehicle body element (8, 9) positioned so as to cooperate with a mounting element (18, 19),
- at least one guide mechanism (20) configured to guide the displacement of the cockpit module (20) relative to the vehicle body into a retained position, said guide mechanism comprising a guide pin (22) arranged in an element selected from a lateral vehicle body element (8, 9) or a mounting element (18, 19), and a corresponding guide channel (24) arranged on the other element, mounting element (18, 19) or lateral vehicle body element (8, 9),
- at least one guide mechanism (20) being associated with each mounting element (18, 19), whilst the guide channel (24) of each guide mechanism (20) is rectilinear and extends parallel to the longitudinal direction of the vehicle in the mounted position of the cockpit module (10), so as to guide the cockpit module in a rectilinear movement parallel to the longitudinal direction of the vehicle into the retained position, the guide channel (24) of each guide mechanism (20) comprising at least one stop (28) designed to immobilize the guide pin (22) in the retained position, the stop (28) comprising a guide surface (30) on which the guide pin (22) is able to slide during the movement thereof into the retained position, said guide surface (30) extending away from a rectilinear wall (27) of the guide channel in the direction of the retained position, and a planar surface (32) perpendicular to the direction of displacement of the guide pin (22), **characterized in that** the guide pin (22) comprises a planar surface (23) which is configured to cooperate with the planar surface (32) of the stop.

2. Mounting structure according to Claim 1, **characterized in that** the guide channel (24) of each guide mechanism (20) comprises a closed end (26) and a stop (28) positioned such that the cockpit module (10) is in the retained position when the guide pin (22) is located between the stop (28) and the closed end (26) or **in that** the guide channel (24) comprises two stops positioned such that the cockpit module (10) is in the retained position when the guide pin (22) is located between the two stops.

3. Mounting structure according to Claim 1 or 2, **characterized in that** the guide channel (24) comprises an open end (25) which is flared to the outside of the guide channel (24).

4. Mounting structure according to one of Claims 1 to 3, **characterized in that** it comprises at least one auxiliary guide mechanism (40) comprising an auxiliary guide pin (42) arranged in an element selected from a lateral vehicle body element (8, 9) or a mounting element (18, 19), and at least one corresponding guide surface (44) arranged on the other element, mounting element (18, 19) or lateral vehicle body element (8, 9), said guide surface (44) extending parallel to the guide channel (24) of a guide mechanism (20) and being designed to guide the auxiliary guide pin (42) when the other guide pins (22) are displaced in their guide channel (24).

5. Mounting structure according to Claim 4, **characterized in that** the guide surface (44) of an auxiliary guide mechanism (40) is provided with at least one stop (48) designed to immobilize the auxiliary guide pin (42) in the retained position.

6. Mounting structure according to one of Claims 1 to 5, **characterized in that** it comprises at least three guide mechanisms (20) comprising a guide channel, distributed between two mounting elements.

7. Mounting structure according to one of Claims 1 to 6, **characterized in that** it comprises two mounting elements (18, 19), each formed from a plate fixed to the cockpit module (10), said plates extending in planes perpendicular to the transverse direction of the vehicle when the cockpit module (10) is mounted on a vehicle.

8. Mounting structure according to Claim 7, **characterized in that** the guide channel (24) of each guide mechanism (20) is produced by cutting out part of the plate forming a mounting element (18, 19).
